# FASCICULE DE BREVET EUROPEEN

(11) **EP 3 504 249 B1**
(45) Date de publication et mention de la délivrance du brevet: **20.01.2021**
(21) Numéro de dépôt: 17828776.9
(22) Date de dépôt: 15.12.2017
(51) Int. Cl.: C08F 8/50, C08F 10/06, C08K 5/14, C08L 23/06, C08L 91/00, C07C 407/00

(54) **COMPOSITION À BASE DE PEROXYDE DE DIALKYLE POUR LA MODIFICATION DE LA RHÉOLOGIE À L'ÉTAT FONDU DU POLYPROPYLÈNE**
ZUSAMMENSETZUNG AUF DER BASIS VON DIALKYLPEROXIDEN ZUR MODIFIZIERUNG DER RHEOLOGIE DER SCHMELZE VON POLYPROPYLEN
COMPOSITION BASED ON DIALKYLPEROXIDES FOR THE MODIFICATION OF THE MELT RHEOLOGY OF POLYPROPYLENE

(30) Priorité: 15.12.2016 FR 1662512
(43) Date de publication de la demande: 03.07.2019
(60) Demande divisionnaire: 20213611.5
(73) Titulaire: Arkema France, 92700 Colombes (FR)
(72) Inventeur: MAJ, Philippe, 69530 Brignais (FR); MÖLLERS, Martin, 89312 Günzburg (DE); TARTARIN, Isabelle, 69006 Lyon (FR)
(74) Mandataire: Arkema Patent
(86) Numéro de dépôt international: PCT/FR2017/053600
(87) Numéro de publication internationale: WO 2018/109415

(56) Documents cités:
- EP-A1- 1 216 991
- EP-A1- 1 447 404
- WO-A1-2009/071670
- DE-A1- 3 032 895

## Description

La présente invention concerne une composition comprenant au moins un peroxyde de dialkyle, sous forme liquide à température ambiante, comportant au moins un solvant choisi parmi les huiles minérales ayant une viscosité supérieure à 15 mPa.s, mesurée à une température de 10°C et un taux de cisaillement de 1000s⁻¹, de préférence choisi parmi les huiles de paraffine.

L'invention se rapporte également à l'utilisation de la composition, telle que définie précédemment, pour modifier la rhéologie à l'état fondu, notamment pour réduire la viscosité à l'état fondu, du polypropylène.

L'invention est aussi relative à l'utilisation d'une ou plusieurs huiles minérales ayant une viscosité supérieure à 15 mPa.s, mesurée à une température de 10°C à un taux de cisaillement de 1000 s⁻¹, pour diminuer l'intensité d'explosion d'une composition comprenant au moins un peroxyde de dialkyle dans une teneur strictement supérieure à 70% en poids, en particulier supérieure à 72% en poids par rapport au poids total de la composition.

La préparation contrôlée de grades de polyoléfine, c'est-à-dire l'obtention de différents types de polymères ayant des masses molaires, des viscosités à l'état fondu, des densités ou encore des distributions de masse molaire spécifiques adaptés à différents types d'application, peut être réalisée en mettant œuvre des méthodes classiques, par exemple lors d'un procédé d'extrusion ou de moulage par injection.

Le contrôle de la rhéologie à l'état fondu des polyoléfines, et en particulier de leur viscosité, peut être notamment réalisé, au cours de l'étape d'extrusion ou de moulage par injection, en présence de composés capables de générer des radicaux libres. En fonction du type de polyoléfine préparée, par exemple le polyéthylène ou le polypropylène, la modification de leur rhéologie à l'état fondu peut conduire à une augmentation ou une diminution de leur masse moléculaire.

Plus précisément, l'utilisation de composés capables de générer des radicaux libres, tels que les peroxydes organiques, et plus particulièrement les peroxydes de dialkyle, conduit à une dégradation contrôlée de la viscosité du polypropylène.

En effet, le polypropylène est une polyoléfine le plus souvent obtenue par polymérisation de monomères de propylène en présence de catalyseurs au cours de la réaction de Ziegler Natta suivie d'une étape de dégradation contrôlée en présence de peroxydes de dialkyle ajoutés, sous forme liquide ou solide, au cours d'une étape d'extrusion ou de moulage par injection à des températures supérieures à 180°C. Dans ces conditions opératoires, les peroxydes de dialkyle génèrent ainsi des radicaux libres qui vont avoir pour fonction de couper les chaînes du polypropylène en induisant des réactions appelées beta-scission. A la suite de telles réactions, des polypropylènes ayant des masses moléculaires plus faibles vont être obtenus.

Plus précisément, la dégradation contrôlée du polypropylène permet de conduire à des produits ayant une masse moléculaire plus faible, un indice de fluidité plus élevé (Melt Flow Index en langue anglaise) ainsi qu'une viscosité à l'état fondu plus faible. Une telle dégradation correspond à un procédé de viscoréduction (appelé visbreaking process en langue anglaise).

Les polypropylènes ainsi obtenus présentent une rhéologie contrôlée et sont particulièrement intéressants commercialement car ils peuvent être utilisés dans de nombreux domaines d'application. En outre, leur procédé d'obtention est facile à mettre en œuvre et permet de générer des polypropylènes ayant des propriétés mécaniques variées.

Cependant, les peroxydes organiques, régulièrement utilisés au cours de l'étape de dégradation contrôlée des polypropylènes, sont des espèces généralement très instables lorsqu'elles sont chauffées. En effet, en cas d'élévation incontrôlée de la température, certains peroxydes organiques peuvent subir une décomposition exothermique autoaccélérée et risquent de s'enflammer et/ou d'exploser de manière violente. Un tel comportement s'avère donc incompatible notamment avec les règles en vigueur pour le transport et le stockage de matières dangereuses dans des unités de production de polyoléfine, en particulier de polypropylène.

Ainsi il s'avère particulièrement avantageux de formuler sous forme liquide les peroxydes organiques, notamment les peroxydes de dialkyle, dans des solvants (aussi appelés phlegmatisants), c'est-à-dire à l'état dilué, afin de diminuer leur danger potentiel et de manière à pouvoir les transporter et les stocker en sécurité. La présence de phlegmatisant ou de solvant permet également d'atténuer grandement la violence de la décomposition.

De plus, l'intérêt de la forme phlegmatisée peut aussi résider dans le gain au stockage en termes de quantité de peroxyde organique par changement de classe de stockage selon les réglementations nationales en vigueur. Cela permet donc de conserver dans les ateliers de production une quantité de peroxyde organique plus importante lorsque le peroxyde est dilué dans un solvant.

Par exemple, le peroxyde de 2,5-diméthyle-2,5-di(tert-butylperoxy)-hexane à l'état pur est classé UN3103, soit de type C alors que dilué à 50% en poids dans une huile minérale, le produit devient classé UN3109 soit de type F conformément aux recommandations pour le transport des matières dangereuses UN, 19^{ème} édition de 2015, dans la section relative aux peroxydes organiques. Dans la réglementation hollandaise de stockage des peroxydes organiques, PGS 8 version 1 de 2011, la taille maximum des équipements de dosage est de 5000 litres pour un peroxyde de type F ou de 100 litres pour un peroxyde de type C. La dilution permet donc de pouvoir transporter et stocker une quantité plus importante de peroxyde organique dans des conteneurs plus grands.

A titre de précision, les recommandations UN, indiquées précédemment, prennent en compte la concentration à laquelle le peroxyde organique engendre notamment (i) une propagation d'une détonation, (ii) une déflagration plus ou moins rapide sous l'effet d'une initiation ou d'une combustion ainsi que (iii) l'intensité de la réaction de décomposition du peroxyde lors d'essais de chauffage sous confinement pouvant être violente, modérée, faible ou nulle.

Ces trois critères sont les critères principaux et incontournables permettant d'attribuer au produit un classement allant de type A à H. Ils sont éventuellement complétés par d'autres critères pour les produits les plus violents (types B et C) ou les moins violents (types E et F).

Un classement de type F signifie que le produit lors des tests effectués au laboratoire selon les méthodes UN du manuel d'épreuves et de critères des recommandations UN pour le transport des matières dangereuses, 6^{ème} édition révisée de 2015 :
1) ne détonne pas à l'état cavité,
2) ne déflagre pas,
3) a une réaction faible ou nulle au chauffage sous confinement, et
4) a une puissance explosible faible ou nulle.

Il est possible de conditionner ce produit répondant à un classement de type F en IBC ou en citerne pour des quantités pouvant aller jusqu'à plusieurs tonnes. Un test supplémentaire pour dimensionnement de l'évent d'urgence permet de confirmer que le produit peut être transporté sous forme d'IBC ou en citerne pour des quantités pouvant aller jusqu'à plusieurs tonnes. Un critère essentiel à considérer pour obtenir un classement de type F selon la réglementation UN correspond à l'intensité de la réaction de décomposition du peroxyde organique lors des essais de chauffage sous confinement. En particulier, l'intensité de la réaction de décomposition lors de ces tests d'un peroxyde organique d'un produit de type F est faible ou nulle. Ces tests sont décrits dans le manuel d'épreuves et de critères des recommandations UN pour le transport des matières dangereuses, 6^{ème} édition révisée de 2015.

Dans l'état de la technique, il a déjà été envisagé d'utiliser différents types d'additifs dans le but de retarder la décomposition des peroxydes organiques, notamment pour les peroxydes de dialkyle.

A titre d'illustration, le document US 5155192 décrit l'utilisation d'hydroperoxydes, de préférence un hydroxyperoxyde tertiaire, en tant que solvant, pour améliorer l'aptitude des compositions à base de peroxydicarbonates à être transportées et stockées.

De la même façon, la demande de brevet WO 2002/092561 porte sur l'utilisation de radicaux nitroxyles, notamment de composés N-hétérocyclique avec l'atome d'azote portant le radical nitroxyle, pour stabiliser thermiquement les peroxydes organiques, comme les peroxydes de dialkyle, afin d'accroître leur stabilité au stockage.

Le document EP 1231206 divulgue quant à lui l'utilisation d'acides dicarboxyliques insaturés pour améliorer la stabilité au cours de la fabrication, du transport et du stockage des compositions à base de peroxydicarbonates de dialkyle.

Par ailleurs, il est également connu de formuler des peroxydes de dialkyle, notamment le peroxyde de 2,5-diméthyle-2,5-di(tert-butylperoxy)-hexane, à une teneur maximale de 70% en poids par rapport au poids total de la composition, dans de l'isododécane afin d'obtenir un produit ayant un classement de type F selon les recommandations UN précédemment décrites.

Toutefois, il a été constaté qu'il n'était pas possible d'augmenter davantage la concentration en peroxyde de dialkyle dans une composition comprenant de l'isododécane, à savoir au-delà de 70% en poids, sous peine de dégrader le classement de type F établi selon la réglementation UN. En effet, la réaction au chauffage sous confinement d'une telle composition selon les tests UN n'est pas « faible » ou « nulle » mais « moyenne » et peut donc engendrer des risques d'explosion. Autrement dit, au-delà d'une teneur de 70% en poids de peroxyde de dialkyle, il n'est pas possible de conditionner la même quantité de composition dans les mêmes conditions (la taille du conditionnement doit alors être diminuée).

De plus, dans certaines applications, la présence d'une quantité importante de solvant, notamment d'isododécane, peut présenter, pendant l'utilisation d'une composition à base de peroxyde organique, un certain nombre d'inconvénients, tels que l'exsudation du solvant, en particulier lorsque le peroxyde organique est utilisé en extrusion à haute température ou une exsudation potentielle (« fogging ») lors de l'utilisation du polypropylène dans lequel le peroxyde organique est ajouté.

Un autre inconvénient de ce type de composition réside aussi dans la présence éventuelle de traces de solvant dans les polypropylènes finalement obtenus par viscoréduction. Il en résulte des efforts logistiques ainsi que des dépenses supplémentaires en termes de mise en œuvre pour séparer les polypropylènes des traces de solvant.

Ainsi l'un des objectifs de la présente invention est de notamment proposer des compositions à base de peroxyde de dialkyle ayant une teneur supérieure à 70% en poids tout en respectant le classement de type F selon la réglementation UN.

En d'autres termes, il existe un réel besoin de proposer des compositions plus concentrées en peroxyde de dialkyle sans dégrader leur classement de type F selon la réglementation UN de manière à ce que ces dernières soient transportables et stockables au moins dans les mêmes conditions de sécurité que les compositions classiques comprenant 70% en poids de peroxyde de dialkyle dans de l'isododécane.

Au vu de ce qui précède, l'invention a notamment pour objectif de proposer des compositions liquides à base de peroxyde de dialkyle qui ne présentent pas les inconvénients mentionnés ci-avant.

La présente invention a donc notamment pour objet une composition liquide comprenant au moins un peroxyde de dialkyle, sous forme liquide à température ambiante, dans une teneur supérieure à 72% en poids et inférieure strictement à 80% en poids par rapport au poids total de la composition, et au moins une huile minérale ayant une viscosité supérieure à 15 mPa.s, mesurée à une température de 10°C à un taux de cisaillement de 1000 s⁻¹.

La composition selon la présente invention a une réaction faible ou nulle au chauffage sous confinement.

Les termes « réaction « faible » » et « réaction « nulle » » correspondent à un résultat susceptible d'être obtenu aux tests de chauffage sous confinement, tels que définis à la section 25 du manuel de tests et de critères des recommandations UN pour le transport des matières dangereuses (« Transport of dangerous goods », chapitre « UN Manual of Tests of Criteria », édition révisée de 2015).

De préférence, la composition selon la présente invention ne détonne pas à l'état cavité, ne déflagre pas, a une réaction faible ou nulle au chauffage sous confinement, et a une puissance explosible faible ou nulle.

L'ensemble des tests pour satisfaire aux critères ci-dessus sont définis aux sections 20 à 28 du manuel de tests et de critères des recommandations UN pour le transport des matières dangereuses identifié ci-dessus.

Encore préférentiellement, la composition selon la présente invention satisfait aux tests de classification pour un peroxyde organique de type F, et encore préférentiellement présente un classement de type F tel qu'établi selon les recommandations UN. La composition selon la présente invention peut donc être transportée et stockée en sécurité dans des unités de production de polypropylène.

Un classement de type F signifie que le produit lors des tests effectués au laboratoire selon les méthodes UN manuel d'épreuves et de critères des recommandations UN pour le transport des matières dangereuses, 6^{ème} édition révisée de 2015 ne détonne pas à l'état cavité, ne déflagre pas, a une réaction faible ou nulle au chauffage sous confinement, et a une puissance explosible faible ou nulle.

La composition selon l'invention présente l'avantage de pouvoir augmenter la concentration pondérale en peroxyde de dialkyle par rapport à une composition contenant 70% en poids de peroxyde de dialkyle dans de l'isododécane sans dégrader parallèlement le classement établi selon la réglementation UN pour le transport et le stockage.

Ainsi la composition selon la présente invention permet d'augmenter la concentration en peroxyde de dialkyle tout en assurant un niveau de violence de décomposition, lors des tests au chauffage sous confinement, inférieur ou égal à celui observé avec une composition contenant 70% en poids de peroxyde de dialkyle dans l'isododécane. En d'autres termes, la violence de la décomposition en peroxyde de dialkyle est inférieure ou identique entre la composition selon l'invention et une composition contenant 70% en poids de peroxyde de dialkyle dans de l'isododécane. En outre, pour une même concentration en peroxyde de dialkyle, on obtient des effets réduits lors de la décomposition en chauffage sous confinement pour la composition selon l'invention par rapport à une composition contenant du peroxyde de dialkyle dans de l'isododécane.

Par ailleurs, la composition selon l'invention permet de réduire la quantité de solvant employé ce qui entraîne une diminution des efforts de logistique pour récupérer les polypropylènes obtenus lors de procédé visant à modifier leur rhéologie à l'état fondu, notamment lors de procédés de viscoréduction.

De plus, la composition selon l'invention permet de limiter l'exsudation du solvant pendant l'extrusion.

L'invention a également pour objet une composition selon la présente invention conditionnée dans un conteneur, de préférence un conteneur de transport, ayant un volume d'au moins 450 litres.

En d'autres termes, l'invention a également pour objet un conteneur, de préférence un conteneur de transport, ayant un volume d'au moins 450 litres comprenant une composition telle que définie précédemment.

De préférence, ledit conteneur présente un volume allant de 450 litres à 2000 litres, préférentiellement allant de 1000 et 1500 litres.

De préférence, ledit conteneur est muni d'un évent pour libérer les gaz. De préférence, ledit conteneur est en plastique ou en métal, encore préférentiellement en plastique.

L'invention a également pour objet l'utilisation de la composition telle que définie précédemment pour modifier la rhéologie à l'état fondu du polypropylène, de préférence pour modifier sa viscosité à l'état fondu et/ou son indice de fluidité à l'état fondu.

De même, la présente invention porte aussi sur l'utilisation d'une ou plusieurs huile minérales ayant une viscosité supérieure à 15 mPa.s, mesurée à une température de 10°C à un taux de cisaillement de 1000 s⁻¹, pour diminuer l'intensité d'explosion d'une composition comprenant au moins un peroxyde de dialkyle dans une teneur strictement supérieure à 70% en poids, par rapport au poids total de la composition.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine.

L'expression « au moins un » est équivalente à l'expression « un ou plusieurs ».

Comme indiqué ci-avant, la composition selon l'invention comprend au moins un peroxyde de dialkyle, sous forme liquide à température ambiante, dans une teneur supérieure à 72% en poids et inférieure strictement à 80% en poids, de préférence allant de 73 à 79% en poids, de préférence de 74 à 78% en poids, et encore préférentiellement de 75 à 77% en poids, par rapport au poids total de la composition.

Au sens de la présente invention, on entend par peroxyde de dialkyle sous forme liquide à température ambiante, un peroxyde sous forme liquide à une température comprise entre 10°C et 30°C, préférentiellement entre 15°C et 25°C.

Le peroxyde de dialkyle se présente sous les formes brutes classiques suivantes :
R-O-O-R ou R-OO-R'-OO-R

Les segments R ou R' peuvent consister en des composants aliphatiques mais également éventuellement en des ramifications portant des fonctions aromatiques ou cycliques.

De préférence, les composés appartenant à la famille des peroxydes de dialkyle sont choisis parmi le 2,5-diméthyle-2,5-di(tert-butylperoxy)-hexyne-3 (Luperox ® 130), le ditert-butyl peroxyde (Luperox ® DI), le ditert-amyl peroxyde (Luperox ® DTA), le 2,5-diméthyl-2,5(di(tert-butylperoxy)hexane (Luperox ® 101) et leurs mélanges.

Plus préférentiellement, le peroxyde de dialkyle correspond au 2,5-diméthyl-2,5(di(tert-butylperoxy)hexane vendu sous la dénomination commerciale Luperox ® 101.

Avantageusement, le ou les peroxydes de dialkyle est ou sont présent(s) dans une teneur d'environ 77% en poids par rapport au poids total de la composition selon l'invention.

Encore avantageusement, le composé 2,5-diméthyl-2,5(di(tert-butylperoxy)hexane se trouve à une teneur d'environ 77% en poids par rapport au poids total de la composition selon l'invention.

En variante, le ou les peroxydes de dialkyle est ou sont présent(s) dans une teneur d'environ 75% en poids par rapport au poids total de la composition selon l'invention.

Conformément à cette variante, le composé 2,5-diméthyl-2,5(di(tert-butylperoxy)hexane se trouve de préférence à une teneur d'environ 75% en poids par rapport au poids total de la composition selon l'invention. Comme indiqué ci-avant, la composition selon l'invention comprend en outre au moins une huile minérale ayant une viscosité supérieure à 15 mPa.s, mesurée à une température de 10°C à un taux de cisaillement de 1000 s⁻¹.

La viscosité est mesurée à une température de 10°C à un taux de cisaillement de 1000 s⁻¹ avec un viscotesteur VT550 de Haake équipé d'un rotor NV.

Au sens de la présente invention, une huile minérale est un mélange d'alcanes saturés cycliques ou non, ramifiés ou non (ex : huiles isoparaffiniques, huiles naphthéniques), des dérivés aromatiques substitués ou non (ex : huiles aromatiques), les poly alphaoléfines (plus communément connues sous PAO) (ex : huiles synthétiques). L'huile minérale est liquide à pression atmosphérique et température ambiante, c'est-à-dire à une température comprise entre 10°C et 30°C, préférentiellement entre 15°C et 25°C, et est insoluble dans l'eau.

De préférence, l'huile minérale présente une viscosité allant de 15 à 1000 mPa.s, de préférence allant de 100 à 1000 mPa.s, de préférence allant de 100 à 500 mPa.s, et encore plus préférentiellement allant de 250 à 400 mPa.s, mesurée à une température de 10°C à un taux de cisaillement de 1000 s⁻¹.

De préférence, l'huile minérale est choisie parmi les huiles de paraffine. Selon un mode de réalisation, la composition selon l'invention comprend le composé 2,5-diméthyl-2,5(di(tert-butylperoxy)hexane dans une teneur d'environ 75% en poids par rapport au poids total de ladite composition et au moins une huile minérale ayant une viscosité allant de 15 à 1000 mPa.s, mesurée à une température de 10°C à un taux de cisaillement de 1000 s⁻¹, de préférence une huile minérale choisie parmi les huiles de paraffine. Conformément à ce mode de réalisation, l'huile minérale présente de préférence une viscosité allant de préférence de 100 à 1000 mPa.s, de préférence allant de 100 à 500 mPa.s, et encore plus préférentiellement allant de 250 à 400 mPa.s.

La composition selon l'invention peut également comprendre un ou plusieurs additifs fonctionnels destinés à procurer au polymère auquel est ajouté le peroxyde des propriétés/ caractéristiques particulières.

Ainsi, s'agissant de l'additif, il peut être choisi parmi les antioxydants ; les agents de protection UV ; les agents de mise en œuvre, ayant pour fonction d'améliorer l'aspect final lors de sa mise en œuvre, telles que les amides grasses, l'acide stéarique et ses sels, l'éthylène bis-stéaramide ou les polymères fluorés ; les agents antibuées ; les agents anti-bloquants tels que la silice ou le talc ; les charges telles que le carbonate de calcium et les nanocharges comme par exemple les argiles ; les agents de couplage tels que les silanes ; les agents réticulants comme les peroxydes ; les agents antistatiques ; les agents nucléants ; les pigments ; les colorants ; les plastifiants ; les fluidifiants et les additifs retardateurs de flamme tels que les hydroxydes d'aluminium ou de magnésium.

La composition selon l'invention peut éventuellement également contenir des additifs incluant les agents ajusteurs de pH tels que les tampons phosphate et citrate, les agents chélatants, des biocides par exemple des fongicides, des antiozonants, des antioxidants, des antidégradants, des agents gonflants et des agents de démoulage.

Ces additifs peuvent être ajoutés dans les quantités habituellement utilisées et connues de l'homme de l'art. Ces additifs sont généralement utilisés dans des teneurs comprises entre 10 ppm et 10 000 ppm en poids par rapport au poids de polymère final. Les plastifiants, les fluidifiants et les additifs retardateurs de flamme peuvent atteindre des quantités bien supérieures à 10 000 ppm.

L'invention concerne également l'utilisation de la composition telle que définie précédemment pour modifier la rhéologie à l'état fondu du polypropylène.

Selon un mode de réalisation, la composition est utilisée pour réduire la viscosité à l'état fondu et/ou augmenter l'indice de fluidité du polypropylène.

De préférence, la composition selon l'invention est utilisée pour réduire la viscosité à l'état fondu du polypropylène.

De la même façon, la composition selon l'invention est utilisée pour augmenter l'indice de fluidité à l'état fondu du polypropylène.

L'indice de fluidité à l'état fondu du polypropylène est mesuré conformément aux méthodes couramment utilisées pour caractériser les matériaux thermoplastiques permettant d'obtenir des informations sur l'extrudabilité ainsi que les possibilités de mise en forme du matériau telles que celles décrites dans ASTM D1238 ou NF T 51-016.

Enfin, la présente invention a également pour objet un procédé de modification de la rhéologie à l'état fondu du polypropylène comportant une étape d'extrusion du polypropylène à une température entre 140 et 300°C et plus particulièrement entre 170 et 250°C, pendant quelques secondes à quelques minutes maximum en présence d'une composition telle que définie ci-avant.

De préférence, le procédé selon l'invention est un procédé de viscoréduction du polypropylène.

Préférentiellement encore, le procédé de viscoréduction du polypropylène comporte une étape d'extrusion du polypropylène à une température entre 140 et 300°C et plus particulièrement entre 170 et 250°C, pendant quelques secondes à quelques minutes maximum en présence d'une composition telle que définie ci-avant.

Au sens de la présente invention, on entend par « quelques secondes à quelques minutes », de 3 secondes à 9 minutes, de préférence de 10 secondes à 5 minutes et encore préférentiellement de 30 secondes à 2 minutes.

Avantageusement, la composition comprend 77% en poids du composé 2,5-diméthyl-2,5(di(tert-butylperoxy)hexane par rapport au poids total de ladite composition.

Avantageusement encore, la composition comprend 75% en poids du composé 2,5-diméthyl-2,5(di(tert-butylperoxy)hexane par rapport au poids total de ladite composition.

Le polypropylène obtenu est de préférence un homopolymère de propylène ou un copolymère de propylène comprenant au moins un co-monomère choisi parmi l'éthylène, le 1-butène, le 1-hexène et le 1-octène.

Plus préférentiellement, le polypropylène est un homopolymère de propylène ou un copolymère ayant principalement des motifs dérivés de propylène.

Par ailleurs, l'invention concerne aussi l'utilisation d'au moins une huile minérale ayant une viscosité supérieure à 15 mPa.s, mesurée à une température de 10°C à un taux de cisaillement de 1000 s⁻¹, pour diminuer l'intensité d'explosion d'une composition comprenant au moins un peroxyde de dialkyle dans une teneur strictement supérieure à 70% en poids, en particulier supérieure à 71%, de préférence supérieure à 72%, de préférence supérieure à 73%, préférence supérieure à 74%, encore préférentiellement supérieure à 75%, en poids par rapport au poids total de la composition.

On entend par « intensité d'explosion » l'évaluation de la violence de la décomposition de la composition telle que mesurée lors du chauffage sous confinement de la composition, telle que décrite ci-avant, conformément aux tests effectués au laboratoire selon les méthodes UN de la section 25 du manuel d'épreuves et de critères des recommandations UN pour le transport des matières dangereuses, 6^{ème} édition révisée de 2015.

Le peroxyde de dialkyle, présent dans la composition, est tel que défini précédemment et est de préférence le composé 2,5-diméthyl-2,5(di(tert-butylperoxy)hexane.

De préférence, l'huile minérale telle que décrite ci-avant est utilisée pour diminuer l'intensité d'explosion d'une composition comprenant au moins un peroxyde de dialkyle dans une teneur strictement supérieure à 70% en poids et strictement inférieure à 80% en poids par rapport au poids total de la composition.

Les exemples suivants servent à illustrer l'invention sans toutefois présenter un caractère limitatif.

### EXEMPLES

La composition selon l'invention (A) et deux compositions comparatives (B) et (C) ont été préparées à l'aide de la matière première suivante :

### A. Matière première utilisée

Le peroxyde de dialkyle utilisé est le 2,5-diméthyl-2,5(di(tert-butylperoxy)hexane pur à 94,4% vendu sous la dénomination commerciale Luperox ® 101 par la société ARKEMA.

### B. Protocole de préparation des compositions

D'une part, le 2,5-diméthyl-2,5-(di(tert-butylperoxy)hexane est dilué dans une huile blanche minérale ayant une viscosité de 321 mPa.s à 10°C, 1000 s⁻¹ de manière à obtenir :
- une composition comprenant 77% en poids de peroxyde de dialkyle par rapport au poids total de la composition (composition A selon l'invention), et
- une composition comprenant 71% en poids de peroxyde de dialkyle par rapport au poids total de la composition (composition B comparative).

D'autre part, le 2,5-diméthyl-2,5-(di(tert-butylperoxy)hexane est dilué dans de l'isododécane ayant une viscosité de 1,7 mPa.s à 10°C, 1000 s⁻¹ de manière à obtenir :
- une composition comprenant 71% en poids de peroxyde de dialkyle par rapport au poids total de la composition (composition C comparative).

Les viscosités sont mesurées à une température de 10°C à l'aide d'un viscotesteur VT550 de Haake équipé d'un rotor NV à différents taux de cisaillement. La viscosité à 1000 s⁻¹ a été interpolée à partir des résultats aux taux de cisaillement voisins.

### C. Tests comparatifs

Des essais comparatifs ont été réalisés suivant les méthodes UN E1 et E2 décrites dans le manuel de tests et de critères des recommandations UN pour le transport des matières dangereuses aux chapitres consacrés aux peroxydes organiques (« Transport of dangerous goods », chapitre « UN Manual of Tests of Criteria », édition révisée de 2015).

Les méthodes UN E1 et E2 ont pour but de déterminer la sensibilité des compositions (A), (B) et (C) à l'effet d'un chauffage intense sous un confinement défini. Ces méthodes sont décrites dans la section 25 « test series E » du manuel UN d'épreuves et de critères, 6ème édition révisée. La méthode UN E1 consiste à chauffer rapidement dans un tube clos muni d'un orifice calibré dans sa partie supérieure une certaine quantité du produit à tester. En fonction de la déformation éventuelle du tube ou du schéma de rupture du tube, le résultat est classé comme « explosion » ou « pas d'explosion » pour chaque essai réalisé. Les essais sont faits par diamètre croissant de 1 à 10 mm jusqu'à obtenir 3 résultats « pas d'explosion » pour un diamètre donné. Le diamètre limite reporté dans les résultats est le plus grand diamètre pour lequel au moins un test sur trois a conduit à un résultat « explosion ». En fonction du diamètre limite et éventuellement du schéma de déformation du tube, l'effet est classé comme « violent », « moyen », « faible » ou « nul ».

La méthode UN E2 consiste à chauffer rapidement une certaine quantité du produit à tester dans un tube clos muni dans sa partie supérieure d'un orifice calibré ainsi que d'un disque de rupture de pression d'éclatement 6 bars. Le degré de sensibilité d'une substance au chauffage sous confinement suivant le test UN E2 est exprimé par le diamètre limite.

Il s'agit du diamètre le plus grand, exprimé en mm, de l'orifice calibré pour lequel il est observé au moins un éclatement du disque de rupture sur trois essais.

### D. Résultats

Les résultats sont regroupés dans les tableaux suivants :

### 1. Résultats selon la méthode UN E1

| Composition | Concentration en peroxyde organique | Solvant | Viscosité du solvant (mPa.s)* | Résultat pour un diamètre | |
|---|---|---|---|---|---|
| | | | | 1 mm | 1,5 mm |
| C | 71% | Isododéca ne | 1,7 | explosio n | Pas d'explosio n |
| A | 77% | Huile minérale blanche | 321 | explosio n | Pas d'explosio n |

| | | | | | |
|---|---|---|---|---|---|
| *Mesurée à 10°C, 1000 s⁻¹ | | | | | |

### 2. Résultats selon la méthode E2

| Composition | Concentration en peroxyde organique | Solvant | Viscosité (mPa.s)* | Diamètre limite en mm |
|---|---|---|---|---|
| | | | | |
| c | 71% | Isododé cane | 1,7 s⁻¹ | 2 |
| B | 71% | Huile minérale blanche | 321 | 1 |
| A | 77% | Huile minérale blanche | 321 | 2 |

Les tests effectués pour le chauffage sous confinement ont résulté en une intensité « faible » de la décomposition du peroxyde de dialkyle pour les trois produits testés suivant les recommandations UN.

Ces résultats, en complément d'autres tests, ont conduit au classement par le BAM (« Bundesanstalt für Materialforschung und -prüfung ») des trois produits testés comme type F pour le transport et le stockage suivant les classifications UN.

Par ailleurs, l'utilisation d'un solvant présentant une viscosité importante permet de réduire la violence de la décomposition à concentration identique ou pour un même niveau de violence de décomposition au test de chauffage sous confinement d'accroître sensiblement la concentration en matière active.

## Revendications

1. Composition liquide comprenant au moins un peroxyde de dialkyle, sous forme liquide à température ambiante, dans une teneur supérieure à 72% en poids et inférieure strictement à 80% en poids par rapport au poids total de la composition, et au moins une huile minérale dont la viscosité est supérieure à 15 mPa.s, mesurée à une température de 10°C à un taux de cisaillement de 1000 s⁻¹.

2. Composition selon la revendication 1, **caractérisée en ce que** le peroxyde de dialkyle est choisi parmi le 2,5-diméthyle-2,5-di(tert-butylperoxy)-hexyne-3, le ditert-butyl peroxyde, le ditert-amyl peroxyde, le 2,5-diméthyl-2,5(di(tert-butylperoxy)hexane et leurs mélanges.

3. Composition selon la revendication 1 ou 2, **caractérisée en ce que** le peroxyde de dialkyle est le 2,5-diméthyl-2,5(di(tert-butylperoxy)hexane.

4. Composition selon l'une quelconque des revendications précédentes, **caractérisée en ce que** le peroxyde de dialkyle est dans une teneur allant de 73 à 79% en poids, de préférence de 74 à 78% en poids, et encore préférentiellement de 75 à 77% en poids par rapport au poids total de la composition.

5. Composition selon l'une quelconque des revendications précédentes, **caractérisée en ce que** l'huile minérale présente une viscosité allant de 15 à 1000 mPa.s, de préférence allant de 100 à 1000 mPa.s, préférentiellement allant de 100 à 500 mPa.s, encore plus préférentiellement allant de 250 à 400 mPa.s, mesurée à une température de 10°C à un taux de cisaillement de 1000 s-1.

6. Composition selon l'une quelconque des revendications précédentes, **caractérisée en ce que** l'huile minérale est choisie parmi les huiles de paraffine.

7. Composition selon l'une quelconque des revendications précédentes, **caractérisée en ce qu'**elle présente une réaction faible ou nulle aux tests de chauffage sous confinement, tels que définis à la section 25 du manuel de tests et de critères des recommandations UN pour le transport des matières dangereuses, édition 2015.

8. Utilisation de la composition telle que définie selon l'une quelconque des revendications précédentes, pour la modification de la rhéologie à l'état fondu du polypropylène.

9. Utilisation selon la revendication 8, pour la réduction de la viscosité à l'état fondu du polypropylène.

10. Utilisation selon la revendication 8, pour l'augmentation de l'indice de fluidité à l'état fondu du polypropylène.

11. Procédé de modification de la rhéologie à l'état fondu du polypropylène comportant une étape d'extrusion ou d'injection par moulage du polypropylène à une température entre 140 et 300°C et plus particulièrement entre 170 et 250°C, pendant quelques secondes à quelques minutes maximum en présence d'une composition telle que définie selon l'une quelconque des revendications 1 à 7.

12. Procédé selon la revendication 11 de viscoréduction du polypropylène.

13. Procédé selon la revendication 11 ou 12 dans lequel le polypropylène est un homopolymère de propylène ou un copolymère de propylène comprenant au moins un co-monomère choisi parmi l'éthylène, le 1-butène, le 1-hexène et le 1-octène.

14. Utilisation d'au moins une huile minérale ayant une viscosité supérieure à 15 mPa.s, mesurée à une température de 10°C à un taux de cisaillement de 1000 s-1, pour diminuer l'intensité d'explosion d'une composition comprenant au moins un peroxyde de dialkyle dans une teneur strictement supérieure à 70% en poids, en particulier supérieure à 72% en poids par rapport au poids total de la composition.

15. Conteneur, de préférence conteneur de transport, ayant un volume d'au moins 450 litres, comprenant une composition selon l'une quelconque des revendications 1 à 7.

## Patentansprüche

1. Flüssige Zusammensetzung, umfassend mindestens ein Dialkylperoxid in flüssiger Form bei Umgebungstemperatur in einem Gehalt von mehr als 72 Gew.-% und strikt unter 80 Gew.-%, bezogen auf das Gesamtgewicht der Zusammensetzung, und mindestens ein Mineralöl, dessen Viskosität, gemessen bei einer Temperatur von 10°C und einer Scherrate von 1000 s⁻¹, höher als 15 mPa.s ist.

2. Zusammensetzung nach Anspruch 1, **dadurch gekennzeichnet, dass** das Dialkylperoxid aus 2,5-Dimethyl-2,5-di(tert-butylperoxy)hexin-3, Di-tert-butylperoxid, Di-tert-amylperoxid, 2,5-Dimethyl-2,5(di(tert-butylperoxy)hexan und ihren Gemischen ausgewählt ist.

3. Zusammensetzung nach Anspruch 1 oder 2, **dadurch gekennzeichnet, dass** es sich bei dem Dialkylperoxid um 2,5-Dimethyl-2,5(di(tert-butylperoxy)hexan handelt.

4. Zusammensetzung nach einem der vorhergehenden Ansprüche, **dadurch gekennzeichnet, dass** das Dialkylperoxid in einem Gehalt von 73 bis 79 Gew.-%, vorzugsweise von 74 bis 78 Gew.-% und noch stärker bevorzugt von 75 bis 77 Gew.-%, bezogen auf das Gesamtgewicht der Zusammensetzung, vorliegt.

5. Zusammensetzung nach einem der vorhergehenden Ansprüche, **dadurch gekennzeichnet, dass** das Mineralöl eine Viskosität, gemessen bei einer Temperatur von 10°C und einer Scherrate von 1000 s⁻¹, von 15 bis 1000 mPa.s, vorzugsweise von 100 bis 1000 mPa.s, bevorzugt von 100 bis 500 mPa.s, noch stärker bevorzugt von 250 bis 400 mPa.s aufweist.

6. Zusammensetzung nach einem der vorhergehenden Ansprüche, **dadurch gekennzeichnet, dass** das Mineralöl aus Paraffinölen ausgewählt ist.

7. Zusammensetzung nach einem der vorhergehenden Ansprüche, **dadurch gekennzeichnet, dass** sie bei Prüfungen des Erhitzens unter Einschluss, wie im Abschnitt 25 des UN-Handbuchs über Prüfungen und Kriterien der Empfehlungen für die Beförderung gefährlicher Güter, Auflage 2015, definiert, eine geringe oder keine Reaktion zeigt.

8. Verwendung der Zusammensetzung nach einem der vorhergehenden Ansprüche zur Modifikation der Schmelzrheologie von Polypropylen.

9. Verwendung nach Anspruch 8 zur Verringerung der Schmelzviskosität von Polypropylen.

10. Verwendung nach Anspruch 8 zur Erhöhung des Schmelzflussindex von Polypropylen.

11. Verfahren zur Modifikation der Schmelzrheologie von Polypropylen, umfassend einen Schritt der Extrusion oder des Spritzgießens von Polypropylen bei einer Temperatur zwischen 140 und 300°C und insbesondere zwischen 170 und 250°C während einiger Sekunden bis maximal einiger Minuten in Gegenwart einer Zusammensetzung nach einem der Ansprüche 1 bis 7.

12. Verfahren nach Anspruch 11 zum Visbreaking von Polypropylen.

13. Verfahren nach Anspruch 11 oder 12, wobei es sich bei dem Polypropylen um ein Propylenhomopolymer oder ein Propylencopolymer, das mindestens ein aus Ethylen, 1-Buten, 1-Hexen und 1-Octen ausgewähltes Comonomer umfasst, handelt.

14. Verwendung mindestens eines Mineralöls mit einer Viskosität, gemessen bei einer Temperatur von 10°C und einer Scherrate von 1000 s-1, von mehr als 15 mPa.s zum Verringern der Explosionsstärke einer Zusammensetzung, die mindestens ein Dialkylperoxid in einem Gehalt von strikt über 70 Gew.-%, insbesondere über 72 Gew.-%, bezogen auf das Gesamtgewicht der Zusammensetzung, umfasst.

15. Behälter, vorzugsweise Transportbehälter, mit einem Volumen von mindestens 450 Litern, der eine Zusammensetzung nach einem der Ansprüche 1 bis 7 umfasst.

## Claims

1. A liquid composition comprising at least one dialkyl peroxide, in liquid form at ambient temperature, with a content greater than 72% by weight and strictly less than 80% by weight relative to the total weight of the composition, and at least one mineral oil with viscosity greater than 15 mPa.s, measured at a temperature of 10°C and a shear rate of 1000 s⁻¹.

2. The composition according to claim 1, **characterised in that** the dialkyl peroxide is chosen among 2,5-dimethyl-2,5-di(tert-butylperoxy)-hexyne-3, ditert-butylperoxyde, ditert-amyl peroxyde, 2,5-dimethyl-2,5(di(tert-butylperoxy)hexane, and mixtures thereof.

3. The composition according to claim 1 or 2, **characterised in that** the dialkyl peroxide is 2,5-dimethyl-2,5(di(tert-butylperoxy)hexane.

4. The composition according to any of the preceding claims, **characterised in that** the content of the dialkyl peroxide is comprised within a range of from 73 to 79% by weight, preferably from 74 to 78% by weight, and yet more preferentially from 75 to 77% by weight, relative to the total weight of the composition.

5. The composition according to any of the preceding claims, **characterised in that** the mineral oil has a viscosity of from 15 to 1000 mPa.s, preferably from 100 to 1000 mPa.s, preferably from 100 to 500 mPa.s, and yet more preferentially from 250 to 400 mPa.s, measured at a temperature of 10°C and at a shear rate of 1000 s⁻¹.

6. The composition as claimed in any one of the preceding claims, **characterized in that** the mineral oil is chosen among the paraffin oils.

7. The composition as claimed in any one of the preceding claims, **characterized in that** it shows a low or no effect when heated under confinement as defined in section 25 of the Manual of Tests and Criteria of the UN Recommendations on the Transport of Dangerous Goods, revised edition of 2015.

8. Use of the composition according to any one of the preceding claims, to modify the melt rheology of the polypropylene.

9. Use of the composition according to claim 8, to modify the melt viscosity of the polypropylene.

10. Use according to claim 8, to increase the melt flow index of the polypropylene.

11. Method for modifying the melt rheology of the polypropylene comprising a step in which the polypropylene is extruded at a temperature of between 140 and 300°C and more particularly between 170°C and 250°C, for a few seconds to a maximum of a few minutes in the presence of a composition as defined according to any one of claims 1 to 7.

12. Method according to claim 11 of visbreaking the polypropylene.

13. Method according to claim 11 or 12 in which the polypropylene is a propylene homopolymer or propylene copolymer comprising at least one comonomer chosen among ethylene, 1-butene, 1-hexene and 1-octene.

14. Use of at least one mineral oil with viscosity greater than 15 mPa.s, measured at a temperature of 10°C and at a shear rate of 1000 s-1, to deacrease the explosion intensity of a composition comprising at least one dialkyl peroxide in a content strictly greater than 70% by weight, in particular greater than 72% by weight, relative to the total weight of the composition.

15. Container, preferably transport container, having a volume of at least 450 litres, comprising a composition according to any one of claims 1 to 7, packaged in a container.
